(19) Europäisches Patentamt
European Patent Office
Office européen des brevets

(11) EP 0 523 930 B1

(12) **EUROPEAN PATENT SPECIFICATION**

(45) Date of publication and mention
of the grant of the patent:
**09.10.1996 Bulletin 1996/41**

(51) Int Cl.6: **C08F 2/24**, C08F 14/06,
D06N 3/06

(21) Application number: **92306378.8**

(22) Date of filing: **10.07.1992**

(54) **Emulsion Polymerisation**

Emulsionspolymerisation

Polymérisation en émulsion

(84) Designated Contracting States:
**AT BE CH DE DK ES FR GB GR IT LI NL PT SE**

(30) Priority: **16.07.1991 EP 91306426**

(43) Date of publication of application:
**20.01.1993 Bulletin 1993/03**

(73) Proprietor: **National Starch and Chemical
Investment Holding Corporation
Wilmington, Delaware 19809 (US)**

(72) Inventor: **Baines, Stephen John
Roffrey, Horsham, West Sussex RH12 4LH (GB)**

(74) Representative:
**Hagemann, Heinrich, Dr.rer.nat., Dipl.-Chem. et
al
Patentanwälte
Hagemann & Kehl
Postfach 86 03 29
81630 München (DE)**

(56) References cited:
**EP-A- 0 292 155          EP-A- 0 373 866
FR-A- 1 257 287          US-A- 2 843 576
US-A- 3 975 338          US-A- 4 150 210**

• **Encycl. Pol. Sci. Eng., Mark et al, vol. 17, pag.
321, Wiley & Sons, US, 1985**

## Description

<u>Field of the invention</u>

This invention relates to emulsion polymerisation and concerns a vinyl chloride/ethylene polymer emulsion, a method of making the polymer emulsion, use of the polymer emulsion and articles treated with the polymer emulsion.

<u>Background to the invention</u>

It is known to produce emulsion polymers from vinyl chloride (VC) monomer mixed with a smaller amount of ethylene (E) monomer. VC and E are both gases at room temperature, and conventional techniques for producing emulsion polymers of VC/E generally require the monomer materials to be liquefied and reacted under very high pressure, typically in the range 2000-3000 bar. Known methods may use stabilising additives such as polyvinyl alcohol or saturated surfactants such as sodium lauryl sulphate, sodium dodecyl benzene sulphonate etc.

US-A-3975338 discloses a process for making a VC emulsion polymer using an emulsifying agent which may be an unsaturated alkyl sulphonate.

FR-A-1257287 discloses a process for making a VC emulsion polymer which may involve use of oleic acid as emulsifier.

US-A-4150210 discloses a process for making a VC emulsion polymer using a $C_{12}$-$C_{18}$ straight chain alkyl or alkenyl surfactant, and a $C_{14}$-$C_{20}$ straight chain alkyl or alkenyl alcohol, which may be oleyl alcohol.

EP-A-0292155 discloses a process for preparing copolymer emulsions, e.g. of vinyl chloride, vinyl acetate and ethylene in which the total amount of VC and E does not exceed 70% of the total amount of monomers.

The present invention is based on a novel method of producing VC/E emulsion polymers.

<u>Summary of the invention</u>

In one aspect the present invention provides a method of making a polymer emulsion by polymerisation of monomer comprising at least 50% by weight vinyl chloride in the presence of 2 to 10% (as solid), of the monomer weight, of an unsaturated surfactant containing an oleyl group, that is a surfactant derived from oleic acid or oleyl alcohol and in which the unsaturaturation in the acid or the alcohol is present in the surfactant, with at least 90% by weight of the monomer being constituted by vinyl chloride and ethylene, the weight ratio of vinyl chloride/ethylene being in the range 95/5 to 50/50.

In another aspect, the invention provides polymer emulsion characterised by being formed from monomer comprising at least 50% by weight vinyl chloride polymerised in the presence of 2 to 10%, of the monomer weight, of an unsaturated surfactant containing an oleyl group, that is a surfactant derived from oleic acid or oleyl alcohol and in which the unsaturaturation in the acid or the alcohol is present in the surfactant, with at least 90% by weight of the monomer being constituted by vinyl chlorid and ethylene, the weight ratio of vinyl chloride/ethylene being in the range of 95/5 to 50/50.

Some surfactant is preferably added at the start of the reaction, with further surfactant being added continuously throughout the reaction, or at least in later stages of the reaction.

The ethylene monomer comprised in the polymer emulsion reduces brittleness. The greater the proportion of E used the softer the final product, so the proportions of VC/E may be varied as desired to produce a product having desired properties. The weight ratio of VC/E will be in the range 95/5 to 50/50, with this ratio preferably being above 60/40.

In accordance with the invention it is not necessary or appropriate to include significant amounts of other major monomer materials such as vinyl acetate which may be used in such polymerisations, and which can increase flammability, produce unwanted hydrolysis products and coarser particle sizes.

The unsaturated surfactant acts as a stabiliser. It is believed the surfactant may graft with the polymer, but the mechanism involved is not yet clear. It is found that use of unsaturated surfactant enables production of VC/E emulsion polymers using lower pressures and shorter reaction times than has hitherto been possible. For example, when performing the present invention reaction pressures of 150 bar or less, more typically 70 bar or less, are appropriate. Such pressures are substantially lower than those used in comparable prior art processes, with obvious advantages. The present invention can also offer shorter reaction times than those of prior art processes for production of VC/E emulsion polymers. The method of the present invention is also capable of giving high conversion of monomer to polymer, i.e. good reaction efficiency, compared with similar prior art processes. Further, emulsion polymers in accordance with the invention generally have improved properties compared with prior art materials, including high solids content, and low precipitate. Moreover, the method of the invention need not use chemicals such as solvents, plasticisers etc.

The unsaturated surfactant contains an oleyl group, ie is a surfactant derived from oleic acid ($CH_3 [CH_2]_7 CH{=}CH$

$[CH_2]_7$ COOH) or oleyl alcohol ($CH_3$ $[CH_2]_7$ CH=CH $[CH_2]_7$ $CH_2$ OH), and in which the unsaturation in the acid or alcohol is substantially present in the surfactant, with or without further substitution of these groups. Preferred unsaturated surfactants include Lankropol OPA (from Harcros Chemicals, UK - Lankropol is a Trade Mark), which is a potassium salt of sulphonated oleic acid, and Emcol K8300 (from Witco Chemical Corporation, USA - Emcol is a Trade Mark), which is an oleyl propanol amide sulphosuccinate. Other suitable surfactants include oleic ether sulphates, such as development products supplied by Harcros known as ECD 2248 and ECD 2249, both of which are fatty alcohol ether sulphate ammonium salts. In general a single unsaturated surfactant is used in practice, although one or more other unsaturated surfactants may optionally be included.

Saturated surfactant(s) may optionally be added to give various desired properties to the final product. These may be in addition to the unsaturated surfactant. For example stabilising agents including sulphosuccinates and sulphosuccinamates such as Aerosol 22 (from Cyanamid, USA - Aerosol is a Trade Mark), which is tetrasodium N-(1,2 -dicarboxy-ethyl)-N-octadecyl sulphosuccinamate, and Aerosol A268 (from Cyanamid, USA), which is disodium isodecyl sulphosuccinate may be used. These particular chemicals give improved colour properties to the final product. Comparative surfactants used are Empicol LXV (from Albright and Wilson Ltd - Empicol is a Trade Mark), which is a narrow cut lauryl alcohol sulphate, sodium salt, and Nansa SSA (from Albright and Wilson Ltd - Nansa is a Trade Mark), which is the acid form of a predominately straight chain alkyl benzene sulphonate. Other surfactants which may additionally be added if required, e.g. nonyl phenol ethoxylates, lauryl ether sulphates, alkyl benzene sulphonates and others known to those skilled in the art.

The surfactant (unsaturated and also saturated if present) is preferably added in an amount (as solid) in the range 4 to 8%, of the monomer weight.

Additional monomers may be included in minor amounts, selected to vary the properties of the polymer to suit the intended use. For example post cross-linkers such as N-methylolacrylamide (NMA) and N-butoxymethylacrylamide (NBMA) may be used: on curing these give improved wet and solvent strength to the final product. Pre cross-linkers such as triallyl cyanurate (TAC) and diallyl phthalate may also be used. In addition, stabilising comonomers such as sodium vinyl sulphonate (SVS), acrylic acid and acrylamide may be included. One typical monomer weight composition is VC/E/NMA/SVS 71/25/3/1.

Polymerisation of monomers may be effected by any suitable initiator system, as will be well known to those skilled in the art. The initiation system is generally not critical. Thermal initiators such as ammonium persulphate and redox initiators such as hydrogen peroxide/formosul may be used, for instance.

The emulsion polymers may be produced generally using conventional techniques which are known to those skilled in the art and are well documented in the literature. See, for example, "Polymer Synthesis" (Vols I & II) by Sandler & Karo (Academic Press 1974), "Preparative Methods of Polymer Chemistry" (2nd Ed) by Sorensen & Campbell (Interscience 1968), "Methoden der Organischen Chemie" (Houben-Weyl) Band XIV published by Geog Thieme Verlag Stuttgart (1961), "Dispersions based on copolymers of vinyl acetate with ethylene and vinyl chloride " by D B Farmer, M H Edser, Chemistry and Industry, 21 March 1983, Page 228-235, and "Ethylene and its Industrial Derivatives" by S A Miller, Ernest Benn Limited, London, 1969.

Reagents such as ammonia, sodium bicarbonate and calcium acetate are conveniently used to control pH during reaction, in conventional manner.

The emulsion polymers of the invention have properties which make them well suited to use in treatment of textile materials, e.g. as fabric binders. The polymers have flame retardant properties due to the presence of VC, and the polymer provides flame resistance by disrupting the propogating flame by known radical mechanisms and by retaining its position as it burns and charring to generate a barrier. The emulsion polymers obtained are compatible with other additives, e.g. antimony oxide, which may be used in such applications.

As examples of uses in textile treatment, softer polymers (with higher E content) could be used for back coatings to give dimensional stability to fabrics and maintain a barrier coating e.g. for furniture covers. Stiffer polymers (with lower E content) would be used for stiffening fabrics for vertical or louvre blinds, with the flame retardancy properties providing an additional benefit. The polymers will be thermoplastic and mouldable and so useful for car carpets, shoe stiffening etc: pre cross-linking monomers may be included in such materials to improve mouldability and set. The polymers can also have good wet resistance, making them well suited for use as shoe linings.

The polymers have good tensile strength and good flame retardant properties, with both properties being better than those of similar known materials.

The polymers generally have fine particle sizes and in particular unimodal particle sizes, and can be applied to textiles to be treated by a range of conventional techniques including spraying, saturation etc. The fine particle size of the emulsion allows efficient spraying, e.g. onto waddings, without blocking, sedimentation or settling occurring even at dilutions to 15%. The emulsion may be mixed prior to application with additives such as plasticisers, fillers etc. in conventional manner.

In a further aspect the invention thus covers use of a polymer emulsion of the invention in treatment of textile articles.

The invention also includes within its scope a textile article treated with the polymer emulsion of the invention.

The polymer emulsions may also be useful in other applications, e.g. as additives in adhesives for producing good heat seal bonds. The emulsions may also find use in the building industry: the monomers and emulsions are very resistant to hydrolysis and have good stability in an alkaline medium, and so have possible application as, for instance, cement additives to improve the workability and strength of cement.

The invention will be further described, by way of illustration, in the following Examples.

Example 1

A solution of 0.105kg of the unsaturated surfactant Lankropol OPA (50%), 0.035kg sodium vinyl sulphonate (25%), and 0.829kg deionised water was prepared. This solution was adjusted to pH 3.7 with formic acid and contained 5ppm ferric ion added as ferric chloride. The total solution was loaded to a 4 litre pressure reactor.

The reactor and solution were sealed and the contents heated to 30°C. The reactor contents were purged twice to 7 bar with nitrogen and once to 7 bar with ethylene. The reactor was pressurised to 42 bar with ethylene. 0.075kg of vinyl chloride was pumped to the reactor.

Continuous additions of 1.4295kg vinyl chloride and a solution containing 0.007kg sodium bicarbonate, 0.110kg N-methylol acrylamide (48%), 0.200kg deionised water were then added over 6 hours. Simultaneously continuous additions were started of 0.028kg hydrogen peroxide (35%), 0.105kg Lankropol OPA (50%), 0.130kg deionised water and 0.0168kg formosul, 0.035kg sodium vinyl sulphonate (25%), 0.230kg deionised water, both to go in over 8 hours, with the last hour at double rate.

The reactor contents rose to 50°C over 1 hour. The internal temperature was held at 50°C until the end of the addition of the initiators. When the continuous initiators were in, the contents of the reactor were cooled to 30°C while adding 0.00875kg hydrogen peroxide (35%), 0.040kg deionised water and 0.007kg formosul, 0.040kg deionised water over 30 minutes. The contents of the reactor were discharged and a polymer of approximate composition (estimated on the basis of monomer conversion) vinyl chloride/ethylene/N-methylol acrylamide/sodium vinyl sulphonate 86/10/3/1 was obtained.

The product had a solids content of 52.7% and a unimodal particle size of median $0.21 \times 10^{-6}$ metre.

Particle size in this and the following Examples was determined using a Malvern Mastersizer from Malvern Instruments, Malvern, England. Malvern Software, SB09, in Master Mode, using a presentation of 0807 was used. Deionised water was used as diluent. The median is the 50th percentile volume, D(V 0.5) figure.

Example 2

A solution of 0.105kg Lankropol OPA (50%), 0.035kg sodium vinyl sulphonate (25%), 0.829kg deionised water was prepared. This solution was adjusted to pH 3.7 with formic acid and contained 5 ppm ferric ion added as ferric chloride. The total solution was loaded to a 4 litre pressure reactor.

The reactor and solution were sealed and the contents heated to 30°C. The reactor contents were purged twice to 7 bar with nitrogen and once to 7 bar with ethylene. The reactor was pressurised to 56 bar with ethylene. 0.070kg of vinyl chloride was pumped to the reactor.

Continuous additions of 1.347kg vinyl chloride and a solution containing 0.007kg sodium bicarbonate, 0.110kg N-methylol acrylamide (48%), 0.200kg deionised water were then added over 6 hours. Simultaneously continuous additions were started of 0.028kg hydrogen peroxide (35%), 0.105kg Lankropol OPA (50%), 0.130kg deionised water and 0.0168kg formosul, 0.035kg sodium vinyl sulphonate (25%), 0.230kg deionised water, both to go in over 8 hours, with the last hour at double rate.

The reactor contents rose to 50°C over 2 hours. The internal temperature was held at 50°C until the end of the addition of the initiators. When the continuous initiators were in, the contents of the reactor were cooled to 30°C while adding 0.00875kg hydrogen peroxide (35%), 0.040kg deionised water and 0.007kg formosul, 0.040kg deionised water over 30 minutes. The contents of the reactor were discharged and a polymer of approximate composition (estimated on the basis of monomer conversion) vinyl chloride/ethylene/N-methylol acrylamide/sodium vinyl sulphonate 81/15/3/1 was obtained.

The product had solids content of 50.7% and a unimodal particle size of median $0.22 \times 10^{-6}$ metre.

Example 3

A solution of 0.105kg Lankropol OPA (50%), 0.035kg sodium vinyl sulphonate (25%), 0.829kg deionised water was prepared. This solution was adjusted to pH 3.7 with formic acid and contained 5 ppm ferric ion added as ferric chloride. The total solution was loaded to a 4 litre pressure reactor.

The reactor and solution were sealed and the contents heated to 30°C. The reactor contents were purged twice to 7 bar with nitrogen and once to 7 bar with ethylene. The reactor was pressurised to 59 bar with ethylene. 0.058kg of vinyl chloride, 0.00022kg acrylic acid was pumped to the reactor.

Continuous additions of 1.092kg vinyl chloride, 0.00418kg acrylic acid and a solution containing 0.005kg sodium bicarbonate, 0.110kg N-methylol acrylamide (48%), 0.200kg deionised water were then added over 6 hours. Simultaneously continuous additions were started of 0.028kg hydrogen peroxide (35%), 0.105kg Lankropol OPA (50%), 0.130kg deionised water, and 0.00168kg formosul, 0.035kg sodium vinyl sulphonate (25%), 0.230kg deionised water both to go in over 8 hours, with the last hour at double rate.

The reactor contents rose to 50°C over 2 hours. The internal temperature was held at 50°C until the end of the addition of the initiators. The reactor was repressurised to 59 bar ethylene for hours 1-3 of the continuous additions. When the continuous initiators were in, the contents of the reactor were cooled to 30°C while adding 0.00875kg hydrogen peroxide (35%), 0.040kg deionised water, and 0.007kg formosul, 0.040kg deionised water over 30 minutes. The contents of the reactor were discharged and a polymer of approximate composition (estimated on the basis of monomer conversion) vinyl chloride/ethylene/N-methylol acrylamide/sodium vinyl sulphonate/acrylic acid 70.75/25/3/1/0.25 was obtained.

The product had a solids content of 48.0% and a unimodal particle size of median $0.21 \times 10^{-6}$ metre.

Example 4

A solution of 0.142kg Emcol K8300 (37%), 0.035kg sodium vinyl sulphonate (25%), 0.792kg deionised water was prepared. This solution was adjusted to pH 3.7 with formic acid and contained 5 ppm ferric ion added as ferric chloride. The total solution was loaded to a 4 litre pressure reactor.

The reactor and solution were sealed and the contents heated to 30°C. The reactor contents were purged twice to 7 bar with nitrogen and once to 7 bar with ethylene. The reactor was pressurised to 56 bar with ethylene. 0.070kg of vinyl chloride was pumped to the reactor.

Continuous additions of 1.347kg vinyl chloride and a solution containing 0.007kg sodium bicarbonate, 0.110kg N-methylol acrylamide (48%), 0.200kg deionised water were then added over 6 hours. Simultaneously, continuous additions were started of 0.028kg hydrogen peroxide (35%), 0.142kg Emcol K8300 (37%), 0.105kg deionised water and 0.00168kg formosul, 0.035kg sodium vinyl sulphonate (25%), 0.230kg deionised water to both go in over 8 hours, with the last hour at double rate.

The reactor contents rose to 50°C over 1 hour. The internal temperature was held at 50°C until the end of the addition of the initiators. When the continuous initiators were in, the contents of the reactor were cooled to 30°C while adding 0.00875kg hydrogen peroxide (35%), 0.040kg deionised water and 0.007kg formosul, 0.040kg deionised water over 30 minutes. The contents of the reactor were discharged and a polymer of approximate composition (estimated on the basis of monomer conversion) vinyl chloride/ethylene/N-methylol acrylamide/sodium vinyl sulphonate 81/15/3/1 was obtained. the product had a solids content of 48.6% and a unimodal particle size of median $0.87 \times 10^{-6}$ metre.

Example 5 (Comparative).

A solution of 0.0525kg Empicol LXV, 0.035kg sodium vinyl sulphonate (25%), 0.880kg deionised water was prepared. This solution was adjusted to pH 3.7 with formic acid and contained 5 ppm ferric ion added as ferric chloride. The total solution was loaded to a 4 litre pressure reactor.

The reactor and solution were sealed and the contents heated to 30°C. The reactor contents were purged twice to 7 bar with nitrogen and once to 7 bar with ethylene. The reactor was pressurised to 56 bar with ethylene. 0.070kg of vinyl chloride was pumped to the reactor.

Continuous additions of 1.347kg vinyl chloride and a solution containing 0.007kg sodium bicarbonate, 0.110kg N-methylol acrylamide (48%), 0.200kg deionised water were then added over 6 hours. Simultaneously, continuous additions were started of 0.028kg hydrogen peroxide (35%) 0.0525kg Empicol LXV, 0.180kg deionised water and 0.0168kg formosul, 0.035kg sodium vinyl sulphonate (25%), 0.230kg deionised water to both go in over 8 hours, with the last hour at double rate.

The reactor contents rose to 50°C over 1 hour. The internal temperature was held at 50°C until the end of the addition of the initiators. When the continuous initiators were in, the contents of the reactor were cooled to 30°C while adding 0.00875kg hydrogen peroxide (35%), 0.040kg deionised water and 0.0070kg formosul, 0.040kg deionised water over 30 minutes. The contents of the reactor were discharged and a polymer of approximate composition (estimated on the basis of monomer conversion) vinyl chloride/ethylene/N-methylol acrylamide/sodium vinyl sulphonate 81/15/3/1 was obtained.

The product had a solids content of 48.0% and a unimodal particle size of median $1.18 \times 10^{-6}$ metre, but the emulsion showed sediment a day after manufacture.

Example 6 (Comparative)

A solution of 0.0472kg Nansa SSA, 0.0333kg potassium hydroxide (25%), 0.035kg sodium vinyl sulphonate (25%), 0.854kg deionised water was prepared. This solution was adjusted to pH 3.7 with formic acid and contained 5 ppm ferric ion added as ferric chloride. The total solution was loaded to a 4 litre pressure reactor.

The reactor and solution were sealed and the contents heated to 30°C. The reactor contents were purged twice to 7 bar with nitrogen and once to 7 bar with ethylene. The reactor was pressurised to 56 bar with ethylene. 0.070 kg of vinyl chloride was pumped to the reactor.

Continuous additions of 1.347kg vinyl chloride and a solution containing 0.007kg sodium bicarbonate, 0.110kg N-methylol acrylamide (48%), 0.200kg deionised water were then added over 6 hours. Simultaneously, continuous additions were started of 0.028kg hydrogen peroxide (35%), 0.0472kg Nansa SSA, 0.0333kg potassium hydroxide (25%), 0.154kg deionised water and 0.0168kg formosul, 0.035kg sodium vinyl sulphonate (25%), 0.230kg deionised water to both go in over 8 hours, with the last hour at double rate.

The reactor contents rose to 50°C over 1 hour. The internal temperature was held at 50°C until the end of the addition of the initiators. When the continuous initiators were in, the contents of the reactor were cooled to 30°C while adding 0.00875kg hydrogen peroxide (35%), 0.040kg deionised water and 0.007kg formosul, 0.040kg deionised water over 30 minutes. The contents of the reactor were discharged and a polymer of approximate composition (estimated on the basis of monomer conversion) vinyl chloride/ethylene/N-methylol acrylamide/sodium vinyl sulphonate 81/15/3/1 was obtained.

The product had a solids content of 50.5% and a bimodal particle size of median 4.31 x 10$^{-6}$ metre but would not filter through a 0.000063 metre nylon, sieve opening (250 mesh).

Example 7

A solution of 0.0875kg Lankropol OPA (50%), 0.025kg Aerosol 22 (35%), 0.035kg sodium vinyl sulphonate (25%), 0.829kg deionised water was prepared. This solution was adjusted to pH 3.9 with formic acid and contained 5 ppm ferric ion added as ferric chloride. The total solution was loaded to a 4 litre pressure reactor.

The reactor and solution were sealed and the contents heated to 30°C. The reactor contents were purged twice to 7 bar with nitrogen and once to 7 bar with ethylene. The reactor was pressurised to 42 bar with ethylene and then heated to 55°C. 0.075kg of vinyl chloride was pumped to the reactor.

Continuous additions of 1.4295kg vinyl chloride and a solution containing 0.007kg sodium bicarbonate, 0.110kg N-methylol acrylamide (48%), 0.200kg deionised water were then added over 6 hours. Simultaneously, continuous additions were started of 0.028kg hydrogen peroxide (35%), 0.0875kg Lankropol OPA (50%), 0.025kg Aerosol 22 (35%), 0.130kg deionised water and 0.0168kg formosul, 0.035kg sodium vinyl sulphonate (25%), 0.230kg deionised water to both go in over 8 hours, with the last hour at double rate.

The reactor contents rose to 60°C over 20 minutes. The internal temperature was held at 60°C until the end of the addition of the initiators. When the continuous initiators were in, the contents of the reactor were cooled to 30°C while adding 0.00875kg hydrogen peroxide (35%), 0.040kg deionised water and 0.007kg formosul, 0.040kg deionised water over 30 minutes. The contents of the reactor were discharged and a polymer of approximate composition (estimated on the basis of monomer conversion) vinyl chloride/ethylene/N-methylol acrylamide/sodium vinyl sulphonate 81/15/3/1 was obtained.

The product had a solids content of 52.0% and almost unimodal particle size of median 0.38 x 10$^{-6}$ metre.

Example 8

A solution of 0.105kg Lankropol OPA (50%), 0.035kg sodium vinyl sulphonate (25%), 0.829kg deionised water was prepared. This solution was adjusted to pH 3.8 with formic acid and contained 5 ppm ferric ion added as ferric chloride. The total solution was loaded to a 4 litre pressure reactor.

The reactor and solution were sealed and the contents heated to 30°C. The reactor contents were purged twice to 7 bar with nitrogen and once to 7 bar with ethylene. The reactor was pressurised to 55 bar with ethylene. 0.062kg of vinyl chloride was pumped to the reactor.

Continuous additions of 1.180kg vinyl chloride and a solution containing 0.007kg sodium bicarbonate, 0.110kg N-methylol acrylamide (48%), 0.200kg deionised water were then added over 6 hours. Simultaneously, continuous additions were started of 0.028kg hydrogen peroxide (35%), 0.105kg Lankropol OPA (50%), 0.130kg deionised water and 0.0168kg formosul, 0.035kg sodium vinyl sulphonate (25%), 0.230kg deionised water to both go in over 8 hours, with the last hour at double rate.

The reactor contents rose to 50°C over 1 hour. The internal temperature was held at 50°C until the end of the addition of the initiators. The reactor was repressured to 62 bar ethylene for hours 1-3$\frac{1}{2}$ of the continuous additions.

When the continuous initiators were in, the contents of the reactor were cooled to 30°C while adding 0.00875kg hydrogen peroxide (35%), 0.040kg deionised water and 0.007kg formosul, 0.040kg deionised water over 30 minutes. The contents of the reactor were discharged and a polymer of approximate composition (estimated on the basis of monomer conversion) vinyl chloride/ethylene/N-methylol acrylamide/sodium vinyl sulphonate 71/25/3/1 was obtained.

The product had a solids content of 49.9% and a unimodal particle size of median $0.21 \times 10^{-6}$ metre.

Example 9

A solution of 0.105kg Lankropol OPA (50%), 0.035kg sodium vinyl sulphonate (25%), 0.829kg deionised water was prepared. This solution was adjusted to pH 3.8 with formic acid and contained 5 ppm ferric ion added as ferric chloride. The total solution was loaded to a 4 litre pressure reactor.

The reactor and solution were sealed and the contents heated to 30°C. The reactor contents were purged twice to 7 bar with nitrogen and once to 7 bar with ethylene. The reactor was pressurised to 55 bar with ethylene. 0.058kg of vinyl chloride was pumped to the reactor.

Continuous additions of 1.0965kg vinyl chloride and a solution containing 0.007kg sodium bicarbonate, 0.110kg N-methylol acrylamide (48%), 0.200kg deionised water were then added over 6 hours. Simultaneously, continuous additions were started of 0.028kg hydrogen peroxide (35%), 0.105kg Lankropol OPA (50%), 0.130kg deionised water and 0.0168kg formosul, 0.035kg sodium vinyl sulphonate (25%), 0.230kg deionised water to both go in over 8 hours, with the last hour at double rate.

The reactor contents rose to 50°C over 1 hour. The internal temperature was held at 50°C until the end of the addition of the initiators. The reactor was repressurised with ethylene to 64 bar for hours 1-4 of the continuous additions. When the continuous initiators were in, the contents of the reactor were cooled to 30°C while adding 0.00875kg hydrogen peroxide (35%), 0.040kg deionised water and 0.007kg formosul, 0.040kg deionised water over 30 minutes. The contents of the reactor were discharged and a polymer of approximate composition (estimated on the basis of monomer conversion) vinyl chloride/ethylene/N-methylol acrylamide/sodium vinyl sulphonate 66/30/3/1 was obtained.

The product has a solids content of 48.4% and a unimodal particle size of median $0.21 \times 10^{-6}$ metre.

Information on various properties of the products of Examples 1 to 4, 8 and 9 is given in the following Table. For comparison purposes, similar information is also given for products V3479 and V3525, which are both vinyl acetate/vinyl chloride/ethylene emulsions. The Table shows that for polymers of similar hardness, as measured by glass transition temperature, the polymers of the invention made using vinyl chloride/ethylene have improved non-flammability and improved heat resistance.

Information for the Table was obtained as follows:-

Dynamic Mechanical Thermal Analyser (DMTA)

Tg measurements were determined on a Polymer Laboratories MK II instrument, obtainable from Polymer Laboratories, England. The polymer films were prepared as for the flammability tests (see below). Test areas of $10^{-2}$m x 2 x $10^{-3}$m x 5 x $10^{-4}$m samples were run in single cantilever mode, strain x 2, -70°C to +200°C, temperature ramp 2.5°C per minute at 1 Hz and 10 Hz. The Tg was determined from the plot of log E' against temperature at 1 Hz, measuring the intercept of the tangents where the log E' falls sharply.

Flammability

The emulsions were cast out to give films approximately 2 x $10^{-4}$m thick after drying. Drying was effected by standing at room temperature if the emulsions film formed or in an oven if a higher temperature was required to effect film formation.

Strips of polymer 0.1m x $10^{-2}$ m were cut out and suspended lengthwise vertically. A burning match was put to the bottom of the suspended film and any sign of burning was observed.

Heat Resistance

The emulsions were cast out as for the flammability test.

Strips of polymer 0.12m x $10^{-2}$m were cut. The films were suspended lengthwise vertically in an oven. A 0.0333kg load was attached at the bottom of the suspended film. The test length of polymer was 0.1m after suspension.

The oven was heated at a rate of 2.5°C per minute and readings were taken of the length of the suspended film at every 5°C rise in oven temperature. A measure of heat resistance was taken as the temperature at which the film has extended by 2 x $10^{-2}$m.

Acetone Insolubles

Whatman No. 4 filter paper was cut into 0.22m x 5 x $10^{-2}$m strips, weighing about 0.001kg each. The weighed filter paper was impregnated with emulsion to give an added dry weight of about 0.0004kg. The impregnated paper was dried at room temperature or at 60°C if the glass transition temperature of the polymer demanded it. After weighing, the polymer was cured at 150°C for 10 minutes. Duplicates were also left uncured. The impregnated paper was boiled in 0.1 l acetone for 2 hours. After washing with acetone and drying the impregnated paper the amount retained on the paper was determined. The acetone insolubles were then calculated.

TABLE

| Example | Glass Transition Temperature (°C) | Flammability | Heat Resistance (°C) | Acetone Insolubles (%) |
|---|---|---|---|---|
| 1 | 41.5 | Self extinguishing | 70 | 38.7 |
| 2 | 30.5 | Self extinguishing | 58 | 39.0 |
| 3 | 16 | Self extinguishing | 46 | 42.9 |
| 4 | 27 | Self extinguishing | 53 | 44.7 |
| 5 | - | - | - | - |
| 6 | - | - | - | - |
| 7 | - | - | - | - |
| 8 | 17 | Self extinguishing | 46 | 41.8 |
| 9 | 14 | Self extinguishing | 42 | 43.1 |
| V3479 (Vinyl acetate/vinyl chloride/ethylene) | 27 | Burns Rapidly | 56 | 58.4 |
| V3525 (Vinyl acetate/vinyl chloride/ethylene) | 38 | Burns | 48 | 36.1 |

Claims

1. A method of making a polymer emulsion by polymerisation of monomer comprising at least 50% by weight vinyl chloride in the presence of 2 to 10% (as solid), of the monomer weight, of an unsaturated surfactant containing an oleyl group, that is a surfactant derived from oleic acid or oleyl alcohol and in which the unsaturaturation in the acid or the alcohol is present in the surfactant, with at least 90% by weight of the monomer being constituted by vinyl chloride and ethylene, the weight ratio of vinyl chloride/ethylene being in the range 95/5 to 50/50.

2. A polymer emulsion characterised by being formed from monomer comprising at least 50% by weight vinyl chloride polymerised in the presence of 2 to 10%, of the monomer weight, of an unsaturated surfactant containing an oleyl group, that is a surfactant derived from oleic acid or oleyl alcohol and in which the unsaturaturation in the acid or the alcohol is present in the surfactant, with at least 90% by weight of the monomer being constituted by vinyl chlorid and ethylene, the weight ratio of vinyl chloride/ethylene being in the range of 95/5 to 50/50.

3. The method or the polymer of claim 1 or 2, characterised by the weight ratio of vinyl chloride/ethylene being above 60/40.

4. The method or the polymer of claim 1, 2 or 3, characterised by the unsaturated surfactant comprising a potassium salt of sulphonated oleic acid, an oleyl propanol amide sulphosuccinate, or a fatty alcohol ether sulphate ammonium salt.

5. The method or the polymer of any one of the preceding claims, characterised by the use of saturated surfactant (s) in addition to the unsaturated surfactant.

6. The method or the polymer of any one of the preceding claims, characterised by the surfactant being present in an amount (as solid) in the range 4 to 8%, of the monomer weight.

7. Use of polymer emulsion in accordance with claim 2 or any claim dependent thereon in treatment of textile articles.

8. A textile article treated with a polymer emulsion in accordance with claim 2 or any claim dependent thereon.

**Patentansprüche**

1. Verfahren zur Herstellung einer Polymeremulsion durch Polymerisation von Monomeren, umfassend mindestens 50 Gew.-% Vinylchlorid, in Anwesenheit von 2 bis 10 % (als Feststoff), bezogen auf das Monomergewicht, eines eine Oleylgruppe enthaltenden ungesättigten Tensids, das ein von Ölsäure oder Oleylalkohol abgeleitetes Tensid ist, in dem die Ungesättigtheit in der Säure oder dem Alkohol im Tensid vorliegt, wobei mindestens 90 Gew.-% des Monomers aus Vinylchlorid und Ethylen bestehen und das Gewichtsverhältnis von Vinylchlorid:Ethylen im Bereich 95:5 bis 50:50 liegt.

2. Polymeremulsion, dadurch gekennzeichnet, daß sie aus Monomeren gebildet ist, umfassend mindestens 50 Gew.-% Vinylchlorid, die in Anwesenheit von 2 bis 10 %, bezogen auf das Monomergewicht, eines eine Oleylgruppe enthaltenden ungesättigten Tensids, das ein von Ölsäure oder Oleylalkohol abgeleitetes Tensid ist, in dem die Ungesättigtheit in der Säure oder dem Alkohol im Tensid vorliegt, polymerisiert worden sind, wobei mindestens 90 Gew.-% des Monomers aus Vinylchlorid und Ethylen bestehen und das Gewichtsverhältnis Vinylchlorid:Ethylen im Bereich 95:5 bis 50:50 liegt.

3. Verfahren oder Polymer nach Anspruch 1 oder 2, dadurch gekennzeichnet, daß das Gewichtsverhältnis von Vinylchlorid:Ethylen mehr als 60:40 beträgt.

4. Verfahren oder Polymer nach Anspruch 1, 2 oder 3, dadurch gekennzeichnet, daß das ungesättigte Tensid ein Kaliumsalz von sulfonierter Ölsäure, ein Oleylpropanolamidsulfosuccinat oder ein Fettalkoholethersulfatammoniumsalz umfaßt.

5. Verfahren oder Polymer nach einem der vorhergehenden Ansprüche, gekennzeichnet durch die Verwendung von gesättigtem (gesättigten) Tensid(en) zusätzlich zum ungesättigten Tensid.

6. Verfahren oder Polymer nach einem der vorhergehenden Ansprüche, dadurch gekenzeichnet, daß das Tensid in einem Mengenbereich (als Feststoff) von 4 bis 8 %, bezogen auf das Monomergewicht, vorliegt.

7. Verwendung der Polymeremulsion gemäß Anspruch 2 oder einem der davon abhängigen Ansprüche bei der Behandlung von Textilgütern.

**8.** Textilgut, behandelt mit einer Polymeremulsion gemäß Anspruch 2 oder einem der davon abhängigen Ansprüche.

**Revendications**

1. Procédé de préparation d'une émulsion de polymère par polymérisation d'un monomère comprenant au moins 50 % en poids de chlorure de vinyle en présence de 2 à 10 % (sous forme de matière solide), du poids du monomère, d'un surfactant insaturé contenant un groupe oléyle, c'est-à-dire un surfactant dérivé de l'acide oléique ou de l'alcool oléylique dans lequel l'insaturation présente dans l'acide ou l'alcool est présente dans le surfactant, au moins 90 % en poids du monomère étant constitués de chlorure de vinyle et d'éthylène, le rapport pondéral chlorure de vinyle/éthylène étant compris dans l'intervalle de 95/5 à 50/50.

2. Emulsion de polymère, caractérisée en ce qu'elle est formée à partir d'un monomère comprenant au moins 50 % en poids de chlorure de vinyle polymérisés en présence de 2 à 10 %, du poids du monomère, d'un surfactant insaturé contenant un groupe oléyle, c'est-à-dire un surfactant dérivé de l'acide oléique ou de l'alcool oléylique et dans lequel l'insaturation présente dans l'acide ou l'alcool est présente dans le surfactant, au moins 90 % en poids du monomère étant constitués de chlorure de vinyle et d'éthylène, le rapport pondéral chlorure de vinyle/éthylène étant compris dans l'intervalle de 95/5 à 50/50.

3. Procédé ou polymère suivant la revendication 1 ou 2, caractérisé en ce que le rapport pondéral chlorure de vinyle/éthylène est supérieur à 60/40.

4. Procédé ou polymère suivant la revendication 1, 2 ou 3, caractérisé en ce que le surfactant insaturé comprend un sel de potassium d'acide oléique sulfoné, un sulfosuccinate d'oléylpropanolamide, ou un sel d'ammonium de sulfate d'éther-alcool gras.

5. Procédé ou polymère suivant l'une quelconque des revendications précédentes, caractérisé par l'utilisation d'un ou plusieurs surfactants saturés en plus du surfactant insaturé.

6. Procédé ou polymère suivant l'une quelconque des revendications précédentes, caractérisé en ce que le surfactant est présent en une quantité (sous forme de matière solide) comprise dans l'intervalle de 4 à 8%, du poids du monomère.

7. Utilisation d'une émulsion de polymère suivant la revendication 2 ou n'importe quelle revendication en dépendant dans le traitement d'articles textiles.

8. Article textile traité avec une émulsion de polymère suivant la revendication 2 ou n'importe quelle revendication en dépendant.